# EUROPEAN PATENT APPLICATION

(11) **EP 0 637 689 A2**
(43) Date of publication of application: **08.02.1995**
(21) Application number: 94830374.8
(22) Date of filing: 25.07.1994
(51) Int. Cl.: F03H 1/00, H01J 27/14

(54) **Heat-conducting coating for ceramic materials of ion engines**

(30) Priority: 06.08.1993 IT FI930159
(71) Applicant: PROEL TECNOLOGIE S.p.A., I-50125 Firenze (IT)
(72) Inventor: Cirri, Gianfranco, I-50129 Firenze (IT)
(74) Representative: Mannucci, Gianfranco, Dott.-Ing.

(57) **Abstract**

A method is described for increasing the thermal shock resistance and for improving the dissipation of heat in the ceramic materials of ion thrusters. A coating (21) of metallic material with high thermal conductivity is associated externally with the ceramic coating (5) of the discharge chamber (3).

## Description

The invention relates to a new method and to a new device capable of increasing the capacity for dissipation of the heat generated by the discharge inside an ion engine for space propulsion through the ceramic walls of the ionization chamber to the external environment.

In general, the invention is concerned with an ion thruster of the type comprising an outer supporting structure, an ionization chamber made of ceramic material, means of supplying gas to said ionization chamber, and means of ionizing the gas. The invention is concerned more particularly, but not exclusively, with thrusters having a ceramic coating of the acceleration channel, and based on the generation of the discharge in "Closed Electron Drift" conditions, known commercially as "Stationary Plasma Thrusters" (SPT). For a more detailed description of this type of thruster, reference should be made to A.I. Bugrova et al., "Physical processes and characteristics of stationary plasma thrusters with closed electron drift" - A I D A A / A I A A / D G L R / J S A S S, 22nd Int. Elect. Prop. Conference, IEPC-91-079, October 14-17, 1991, Viareggio.

It is known that, in plasma engines or thrusters, part of the power used to generate the plasma by means of a discharge in the propulsion gas is dissipated to the walls of the discharge chamber. The heat transferred to the walls of the chamber from the plasma formed during the discharge is then dissipated by linear conduction to the other walls of the device and/or by radiation towards the exterior.

In general, the walls of the discharge chamber must have good thermal conductivity to avoid the presence of localized overheated areas. The presence of such areas would be extremely damaging to the walls, since over-heating, whether localized or widespread, limits the life of the device by causing over a short period of time the appearance of deformations, erosion of the surface of the discharge chamber, and even fracture.

This problem is particularly marked when the walls of the ionization or discharge chamber are made of ceramic materials, with low thermal conductivity and low thermal shock resistance.

Attempts are currently being made to overcome this problem by the use of particular types of ceramics with good thermal conductivity. These ceramics, however, have disadvantages in respect of function and cost.

The object of the invention, therefore, is to offer a more effective solution to solve the problem of heat dissipation along the ceramic walls of the discharge chamber in SPT or similar thrusters.

More particularly, the object of the invention is to provide an SPT or other thruster having a discharge chamber delimited by ceramic walls and which has high thermal shock resistance and better dissipation of the heat generated by the discharge.

These and other objects and advantages, which will be clearly understood from the following text by those skilled in the art, are obtained with a thruster of the type mentioned initially by providing, essentially, a layer of suitable material with high thermal conductivity, which facilitates heat dissipation and increases thermal shock resistance, in contact with the ceramic material (for example Al₂O₃) forming the ionization chamber.

With this layer of material with high thermal conductivity it is possible, on one hand, to dissipate the heat generated on the ceramic walls toward the external structure of the device and, on the other hand, to provide a uniform temperature of the ceramic material along the whole surface of the chamber in contact with the discharge, as a result of the thermal contact between the ceramic material and the highly conductive layer. For this purpose, it is advantageous to make the layer with high thermal conductivity in the form of a coating covering the whole surface of the ceramic material.

To prevent a negative effect on the phenomena of plasma generation inside the ionization chamber, the material with high thermal conductivity may advantageously be applied to the surfaces of the ceramic material which are not in contact with the discharge and are opposite those which delimit the chamber. In general, the ionization chamber is generally delimited by an outer cylindrical wall. In this case, the material with high thermal conductivity may be disposed to form a coating of the whole outer cylindrical surface of the wall delimiting the ionization chamber.

Normally, an ion thruster of the SPT type has an ionization chamber with an annular configuration delimited by two concentric cylindrical walls made of ceramic material. In this case, the layer of material with high thermal conductivity may be disposed on both of said walls, on the surfaces not in contact with the plasma.

The material with high thermal conductivity may advantageously be a metallic material and in particular may consist of a laminated material, formed by successive application of metallic layers of different types.

Further advantageous characteristics of the device according to the invention are indicated in the attached claims.

The invention also relates to a method for the construction of an ion thruster comprising an ionization chamber made of ceramic material, wherein a layer of material with high thermal conductivity, which is preferably disposed so that it covers the outer surface of the chamber, is disposed in contact with the ceramic material of the ionization chamber.

The invention will be more clearly understood from the description and the attached drawing, which shows a non-restrictive practical example of the invention. In the drawing:-
Fig. 1 is a schematic longitudinal section through an ion thruster of the SPT type made according to the present invention;
Figs. 2 and 3 show an enlargement (not to scale) of detail II in Fig. 1, in two different embodiments; and
Fig. 4 shows the application of the invention to a different type of ion thruster.

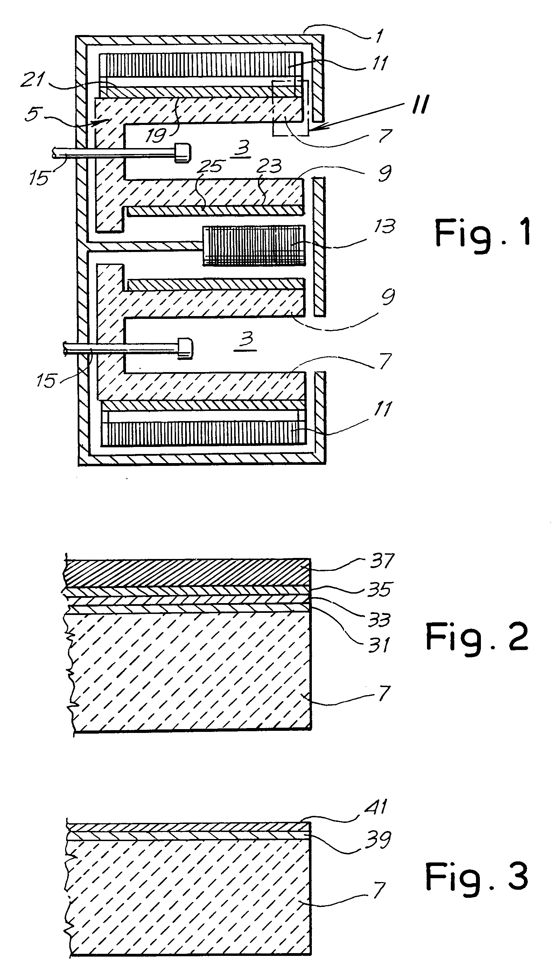

Fig. 1 shows a highly simplified diagram of an SPT thruster, having an outer metallic structure 1, inside which is formed an annular ionization chamber 3 delimited by a block of ceramic material indicated in a general way by 5 and having two concentric cylindrical walls 7 and 9, being the outer and inner walls respectively. A unit with one or more coils 11 is disposed around the ionization chamber, and a second coil 13 is disposed inside the cylindrical inner wall 9.

A gas distributor indicated in a general way by 15, of a type known per se, opens into the ionization chamber 3.

The ionizing discharge which is generated inside the annular chamber 3 tends to overheat the ceramic walls 7 and 9. The heating may be concentrated around the nozzle 17 of the thruster. In order to limit this phenomenon by making the temperature of the ceramic block 5 uniform, thus avoiding localized overheating, and also to facilitate the dissipation toward the metallic structure 1 and toward the outside of the heat generated in the ceramic block 5, the outer cylindrical walls of the ionization chamber are covered with a layer of metallic material. More particularly, the outer surface 19 of the cylindrical wall 7 has a metallic coating 21, while the inner surface 23 of the cylindrical wall 9 has a metallic coating 25.

The metallic coating is formed by technologies of a type known from applications in other sectors. (H. Knoll - Materials and Process of Electron Devices. - Springer Verlag - 1959).

Figs. 2 and 3 show a very enlarged section of a portion of the wall 7 with two different types of metallic layer applied. Fig. 2 shows the application by deposition on to the ceramic material of a triple metallic layer consisting of an inner layer 31 of Moly-manganese, in direct contact with the ceramic material, followed by a nickel layer 33, a copper layer 35 and an outer sheet of Cu-CuNi, indicated by 37. The various layers are welded together with an AgCu alloy.

Fig. 3 shows an embodiment in which a metallic layer having an inner layer of chemical nickel, indicated by 39, and an outer layer of electrolytic copper, indicated by 41, is applied to the ceramic material of the wall 7.

The metallic coating shown in Fig. 2 is vacuum-tight, while the metallic coating shown in Fig. 3 is not vacuum-tight. The choice may be made according to the specific requirements which may arise from time to time.

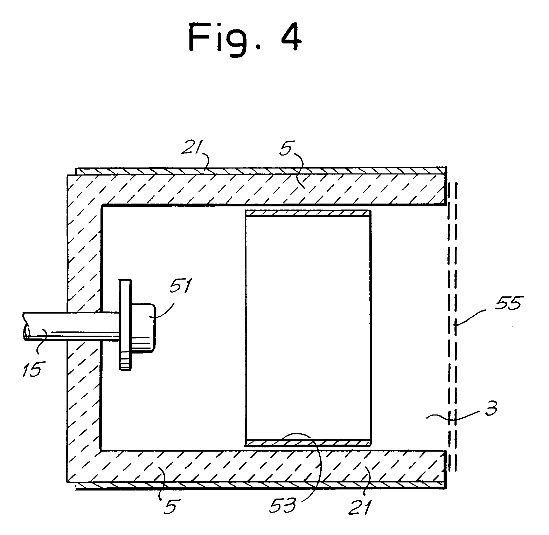

Fig. 4 shows the application of the present invention to an ion thruster having a different structure. The number 3 again indicates the ionization chamber delimited by a cylindrical ceramic wall 5. The number 15 again indicates the gas supply means and the number 21 identifies in a general way the outer coating of material with high thermal conductivity. The number 51 indicates a cathode and 53 indicates an anode, between which the discharge which generates the plasma is initiated. In Fig. 4, the outer structural elements have been omitted, while the number 55 indicates, in a general way, ion extraction grids.

It is to be understood that the drawing shows only an example provided solely as a practical demonstration of the invention, and that this invention may be varied in its forms and arrangements without thereby departing from the scope of the guiding concept of the invention. Any presence of reference numbers in the enclosed claims has the purpose of facilitating the reading of the claims with reference to the description and to the drawing, and does not limit the scope of protection represented by the claims.

## Claims

1. An ion thruster comprising an outer supporting structure (1), an ionization chamber (3) made of ceramic material, means (15) of supplying gas to said ionization chamber (3) and means (11, 13) of ionizing the gas, wherein a layer of material with high thermal conductivity (21, 25) is disposed in contact with the ceramic material forming the ionization chamber (3), to facilitate heat dissipation.

2. The ion thruster as claimed in claim 1, wherein said layer of material with high thermal conductivity (21, 25) is applied to the outer surface (19, 23) of the ceramic material forming the ionization chamber (3).

3. The thruster as claimed in claim 2, wherein said ionization chamber is delimited by an outer cylindrical wall (7) made of ceramic material and wherein said material with high thermal conductivity covers the outer surface (19) of said wall (7).

4. The ion thruster as claimed in claim 2, wherein said ionization chamber has an annular configuration, delimited by two concentric cylindrical walls (7, 9) made of ceramic material, and wherein said material with high thermal conductivity (21, 25) covers the surfaces (19, 23) of both concentric cylindrical walls external to the ionization chamber.

5. The thruster as claimed in one or more of the preceding claims, wherein said material with high thermal conductivity consists of metallic material.

6. The thruster as claimed in claim 5, wherein said layer of metallic material consists of a laminated material.

7. The thruster as claimed in claim 6, wherein said laminated material comprises a first layer (39) of chemical nickel, in contact with the ceramic material, and a second outer layer (41) of electrolytic copper.

8. The thruster as claimed in claim 6, wherein said laminated material comprises a first layer (31) of Moly-manganese, in contact with the ceramic material, a second layer (33) of nickel, a third layer (35) of copper and a fourth outer layer (37) consisting of a sheet of Cu-CuNi.

9. The thruster as claimed in claim 8, wherein the first three layers (31, 33, 35) are welded together by means of an AgCu alloy.

10. A method for the construction of an ion thruster comprising an ionization chamber made of ceramic material, wherein a layer of material with high thermal conductivity is disposed in contact with the ceramic material of the ionization chamber.

11. The method as claimed in claim 10, wherein said material with high thermal conductivity is applied to the outer surface of the ionization chamber to form a coating.

12. The method as claimed in claim 10 or 11, wherein the material with high thermal conductivity is a metallic material.

13. The method as claimed in claim 12, wherein said metallic material is a laminated material.
